# EUROPÄISCHE PATENTSCHRIFT

(11) **EP 0 953 591 B1**
(45) Veröffentlichungstag und Bekanntmachung des Hinweises auf die Patenterteilung: **31.10.2001**
(21) Anmeldenummer: 99104746.5
(22) Anmeldetag: 06.03.1999
(51) Int. Cl.: C08G 77/26

(54) **Stabile Zusammensetzungen wasserlöslicher, Amino- und Alkenyl-funktioneller Organosiloxane, Verfahren zu ihrer Herstellung und ihre Verwendung**
Stable compositions of water soluble amino- and alkenylfunctional organosiloxanes, process for their preparation and use
Compositions stables à base d'organosiloxanes solubles dans l'eau à fonctions amino et alcényle, procédé de leur préparation et utilization

(30) Priorität: 28.04.1998 DE 19818923
(43) Veröffentlichungstag der Anmeldung: 03.11.1999
(73) Patentinhaber: Degussa AG, 40474 Düsseldorf (DE)
(72) Erfinder: Mack, Helmut, Dr., 79618 Rheinfelden (DE); Barfurth, Dieter, 79618 Rheinfelden (DE); Edelmann, Roland, 79664 Wehr (DE); Frings, Albert-Johannes, Dr., 79618 Rheinfelden (DE); Horn, Michael, Dr., 79618 Rheinfelden (DE); Jenkner, Peter, Dr., 79618 Rheinfelden (DE); Laven, Ralf, Dr., 79739 Schwörstadt (DE); Monkiewicz, Jaroslaw, Dr., 79618 Rheinfelden (DE); Standke, Burkhard, Dr., 79540 Lörrach (DE)

(56) Entgegenhaltungen:
- EP-A- 0 675 128
- EP-A- 0 716 127
- EP-A- 0 716 128
- EP-A- 0 832 911

## Beschreibung

Die vorliegende Erfindung betrifft eine stabile Zusammensetzung wasserlöslicher Organosiloxane, die erhältlich ist durch Umsetzen
a) von einem in Wasser löslichen, Amino-funktionellen Alkoxysilan mit mindestens einem in Wasser unlöslichen Alkoxysilan
b) durch Zusatz von Wasser, gegebenenfalls unter Zugabe einer organischen oder anorganischen Säure, und
c) Entfernen des Alkohols, der während der Durchführung von Schritt b) entsteht, aus dem vorliegenden Gemisch,
wobei das Amino-funktionelle Alkoxysilan und das Wasser mindestens in solchen Mengen bei der Umsetzung eingesetzt werden, die es ermöglichen, alle Alkoxygruppen des in Wasser unlöslichen Silans zur Reaktion zu bringen und bei Verdünnen einer so erhaltenen Zusammensetzung mit Wasser im wesentlichen kein Alkohol durch Hydrolyse freigesetzt wird, ferner ein Verfahren zu ihrer Herstellung und ihre Verwendung.

Es ist bekannt, daß Zusammensetzungen Wasser-basierender Organopolysiloxane in der Regel vollständig hydrolysierte und oligomerisierte Organosilaneinheiten enthalten, wobei die Alkoxygruppen der bei der Synthese eingesetzten Organoalkoxysilane praktisch vollständig durch OH-Gruppen substituiert sind. Insbesondere solche Organopolysiloxan-haltigen Systeme auf Wasserbasis finden vermehrt Anwendung, da diese Systeme im wesentlichen frei von Lösemitteln sind und auch bei Verdünnen mit Wasser sowie bei Applikation praktisch keine Alkohole durch Hydrolyse freisetzen.

EP-OS 0 716 127 und EP-OS 0 716 128 offenbaren Organopolysiloxanhaltige Zusammensetzungen auf Wasserbasis, für deren Herstellung neben einem sogenannten "Trägersilan", einem wasserlöslichen Aminoalkoxysilan, und nicht wasserlöslichen Alkylalkoxysilanen sowie Ureidoalkoxysilane in einem weiten pH-Wert-Bereich von 1 bis 11 hydrolytisch oligomerisiert werden und der bei der Umsetzung entstandene Alkohol aus dem Reaktionsgemisch im wesentlichen entfernt wird.

Solche Zusammensetzungen sind in der Regel klare und lagerstabile Flüssigkeiten mit einem Flammpunkt von mehr als 70 °C und finden ein weites Anwendungsfeld, u. a. für die Verbesserung der rheologischen Eigenschaften von Polymerdispersionen und Emulsionen, für die Silanisierung von Oberflächen und vieles mehr. Jedoch erfordert gerade die Einstellung rheologischer Eigenschaften sowie die Modifizierung der Eigenschaften von Oberflächen ein besonders auf das zu modifizierende Produkt abgestimmtes Agens. So werden in der deutschen Patentanmeldung Nr. 196 39 782 Amino-, Glycidether-, Acryl- sowie Methacryl-funktioneile Organopolysiloxan-haltige Zusammensetzungen auf Wasserbasis offenbart.

Ferner lehrt EP 0 675 128 A1 ein Verfahren zur Herstellung einer stabilen Zusammensetzung wasserlöslicher Organosiloxane, indem man ein in Wasser lösliches, Amino-funktionelles Alkoxysilan mit einem in Wasser unlöslichen, Vinyl-funktionellen Alkoxysilan unter Zugabe von Wasser umsetzt und den dabei entstehenden Alkohol aus dem vorliegenden Gemisch entfernt, wobei das Amino-funktionelle Alkoxysilan und das Wasser bei der Umsetzung in solchen Mengen eingesetzt werden, die es ermöglichen, alle Alkoxygruppen des in Wasser unlöslichen Silans zur Reaktion zu bringen, so daß bei Verdünnen einer so erhaltenen Zusammensetzung mit Wasser im wesentlichen kein Alkohol durch Hydrolyse freigesetzt wird.

Solche Zusammensetzungen wasserlöslicher Organosiloxane finden u. a. als Haftvermittler in Compounds eine kommerzielle Anwendung. Hierfür werden Füllstoffe sowie Pigmente in meist aufwendigen Verfahren silanisiert. Oft ist es erforderlich, oberflächenmodifizierte Füllstoffe auf Horde zu trocknen und anschließend durch energieintensive Maßnahmen wieder zu zerkleinern. Der Einsatz einer Sprühtrocknung als denkbare Alternative für eine Hordentrocknung erfordert eine pumpfähige Masse, der jedoch häufig große Mengen an Verarbeitungshilfsmitteln zur Einstellung der Rheologie zugesetzt werden müssen.

Der vorliegenden Erfindung lag die Aufgabe zugrunde, eine weitere stabile Zusammensetzung wasserlöslicher Organosiloxane bereitzustellen. Ein besonderes Anliegen der Erfindung war es, solche Zusammensetzungen in vorteilhafter Weise bei der Silanisierung von Füllstoffen bzw. Pigmenten einzusetzen.

Die gestellte Aufgabe wird erfindungsgemäß entsprechend den Angaben der Patentansprüche gelöst.

Überraschenderweise wurde gefunden, daß eine stabile Zusammensetzung wasserlöslicher Organosiloxane, die erhältlich ist durch Umsetzen
a) von einem in Wasser löslichen, Amino-funktionellen Alkoxysilan, vorzugsweise ein 3-Aminopropyltrialkoxysilan, mit mindestens einem in Wasser unlöslichen, Alkenyl-funktionellen Alkoxysilan, vorzugsweise ein Vinyltrialkoxysilan,
b) durch Zusatz von Wasser und
c) Entfernen des Alkohols, der während der Durchführung von Schritt b) entsteht, aus dem vorliegenden Gemisch,
wobei das Amino-funktionelle Alkoxysilan und das Wasser mindestens in solchen Mengen bei der Umsetzung eingesetzt werden, die es ermöglichen, alle Alkoxygruppen des in Wasser unlöslichen Silans zur Reaktion zu bringen und die Zusammensetzung einen pH-Wert von 2 bis 6, vorzugsweise einen pH-Wert von 3 bis 5, besonders bevorzugt einen pH-Wert von 3,5 bis 5, ganz besonders bevorzugt einen pH-Wert von 3,5 bis 4,5, besitzt, wobei die Einstellung des pH-Werts durch Zugabe einer organischen oder anorganischen, gegebenenfalls wäßrigen Säure, vorzugsweise Ameisensäure, Essigsäure, HCl, HNO₃ oder H₂SO₄, erfolgt, in besonders vorteilhafter Weise auch geeignet ist, die Verarbeitungsbedingungen bei der Silanisierung eines Füllstoffs zu verbessern, wobei eine Mischung aus Füllstoff (z. B. Aluminiumhydroxid), Wasser und einer erfindungsgemäßen Zusammensetzung unter Rühren bereits nach wenigen Minuten eine signifikante Viskositätserniedrigung erfährt, so daß die anfängliche Paste nun in einem dünnflüssigen Zustand ohne Probleme in einfacher und wirtschaftlicher Weise über eine Pumpe beispielsweise einem Sprühtrockner zugeführt werden kann.

Darüber hinaus besitzen Füllstoffe bzw. Pigmente, die unter Verwendung einer erfindungsgemäßen Zusammensetzung silanisiert werden, in vorteilhafter Weise auch funktionelle Eigenschaften, die insbesondere auch in Anstrichfarben, Lacken, Klebstoffen, Dichtungsmassen, Polymermassen sowie Compounds zum Tragen kommen.

Gegenstand der vorliegenden Erfindung ist somit eine stabile Zusammensetzung wasserlöslicher Organosiloxane, die erhältlich ist durch Umsetzen
a) von einem in Wasser löslichen, Amino-funktionellen Alkoxysilan mit mindestens einem in Wasser unlöslichen, Alkenyl-funktionellen Alkoxysilan
b) durch Zusatz von Wasser und
c) Entfernen des Alkohols, der während der Durchführung von Schritt b) entsteht, aus dem vorliegenden Gemisch,
wobei das Amino-funktionelle Alkoxysilan und das Wasser mindestens in solchen Mengen bei der Umsetzung eingesetzt werden, die es ermöglichen, alle Alkoxygruppen des in Wasser unlöslichen Silans zur Reaktion zu bringen und bei Verdünnen einer so erhaltenen Zusammensetzung mit Wasser im wesentlichen kein Alkohol durch Hydrolyse freigesetzt wird und die Zusammensetzung einen pH-Wert von 2 bis 6 besitzt, wobei die Einstellung des pH-Werts während und/oder nach der Umsetzung durch Zugabe einer organischen oder anorganischen, gegebenenfalls wäßrigen Säure erfolgt.

Die erfindungsgemäßen Zusammensetzungen können mit Wasser beliebig verdünnt werden. Bevorzugt weisen die erfindungemäßen Zusammensetzungen einen Gehalt an Organosiloxanen von 1 bis 150 g Si/kg, vorzugsweise 60 bis 130 g Si/kg, besonders vorzugsweise 90 bis 120 g Si/kg, auf und werden im allgemeinen auch so verwendet.

Darüber hinaus ist es von Vorteil, daß auch der Flammpunkt erfindungsgemäßer Zusammensetzungen im allgemeinen über 70 °C liegt, wobei der Gehalt an Alkohol üblicherweise weniger als 1 % beträgt, so daß auch die Anwendung erfindungsgemäßer wasserbasierender Zusammensetzung in besonders vorteilhafter Weise durchgeführt werden kann. Bevorzugt sind solche Zusammensetzungen, die Alkohol, beispielsweise Methanol oder Ethanol, in Mengen von 0,3 bis 0,1 Gew.-%, besonders vorzugsweise weniger als 0,1 Gew.-%, enthalten.

Gegenstand der vorliegenden Erfindung ist auch das Verfahren zur Herstellung einer erfindungsgemäßen stabilen Zusammensetzung wasserlöslicher Organosiloxane, indem man ein in Wasser lösliches, Amino-funktionelles Alkoxysilan mit mindestens einem in Wasser unlöslichen, Alkenyl-funktionellen Alkoxysilan unter Zugabe von Wasser und gegebenenfalls unter Zusatz einer organischen oder anorganischen Säure umsetzt und den dabei entstehenden Alkohol aus dem vorliegenden Gemisch entfernt, wobei das Amino-funktionelle Alkoxysilan und das Wasser bei der Umsetzung mindestens in solchen Mengen eingesetzt werden, die es ermöglichen, alle Alkoxygruppen des in Wasser unlöslichen Silans zur Reaktion zu bringen und bei Verdünnen einer so erhaltenen Zusammensetzung mit Wasser im wesentlichen kein Alkohol durch Hydrolyse freigesetzt wird, und wobei der pH-Wert der Zusammensetzung wähend und/oder nach der Umsetzung durch Zugabe einer organischen oder anorganischen, gegebenenfalls wäßrigen Säure auf einen Wert von 2 bis 6 eingestellt wird.

Beim erfindungsgemäßen Verfahren setzt man als Amino-funktionelles Alkoxysilan vorzugsweise mindestens eines aus der Reihe 3-Aminopropyltrimethoxysilan, 3-Aminopropyltriethoxysilan, N-Aminoethyl-3-aminopropyltrimethoxysilan, N-Aminoethyl-3-aminopropyltriethoxysilan, triaminofunktioneller Propyltrimethoxysilane, triaminofunktioneller Propyltriethoxysilane, 3-Aminopropyl-methyl-dimethoxysilan, 3-Aminopropyl-methyl-diethoxysilan, N-Aminoethyl-3-aminopropyl-methyl-dimethoxysilan, N-Aminoethyl-3-aminopropylmethyl-diethoxysilan, triaminofunktioneller Propyl-methyl-dimethoxysilane und triaminofunktioneller Propyl-methyl-diethoxysilane ein.

Ferner setzt man beim erfindungsgemäßen Verfahren als Alkenyl-funktionelles Alkoxysilan vorzugsweise mindestens eines aus der Reihe Vinyltrimethoxysilan, Vinyltriethoxysilan, Vinyltris(2-methoxy-ethoxy)silan und Vinyltrichlorsilan ein.

Im allgemeinen können als Edukte für das erfindungsgemäße Verfahren Reinstprodukte bis hin zu technischen Qualitäten der bevorzugten Alkoxysilane eingesetzt werden. Geeigneterweise setzt man für das erfindungsgemäße Verfahren Edukte mit einer Reinheit von mehr als 90 % ein.

Im allgemeinen führt man das erfindungsgemäße Verfahren derart aus, daß man mindestens ein Amino-funktionelles Alkoxysilan, beispielsweise 3-Aminopropyltriethoxysilan, und mindestens ein Alkenyl-funktionelles Alkoxysilan, beispielsweise Vinyltrimethoxysilan, und gegebenenfalls eine Säure, beispielsweise Ameisensäure, sowie Wasser, das man vorteilhafterweise in einem Molverhältnis zu dem obengenannten Amino-funktionellen Alkoxysilan von 5 : 1 bis 1 : 1 einsetzt, unter guter Durchmischung und pH-Wert-Kontrolle bei einer Temperatur im Bereich von 10 bis 90 °C zusammenbringt, umsetzen läßt und den dabei entstehenden Alkohol gegebenenfalls unter vermindertem Druck aus dem System entfernt, wobei man so abgeführte Alkoholmengen in gleichem Umfang durch Wasser, das gegebenenfalls angesäuert ist, ersetzen kann. Vorzugsweise gibt man die Säure während und/oder nach der Umsetzung zu, so daß das erfindungsgemäße Produkt einen pH-Wert im Bereich zwischen 2 und 6 aufweist.

Geeigneterweise setzt man hierbei eine einwertige Säure, beispielsweise Ameisensäure, Essigsäure, HCI oder HNO₃, ein. Eine so erhaltene, klare Zusammensetzung wasserlöslicher Organosiloxane ist im allgemeinen über einen Zeitraum von bis zu 6 Monaten und in besonders vorteilhafter Weise auch darüber hinaus stabil. Die hier vorliegenden Organosiloxane weisen nach allgemeinem chemischen Verständnis einen Oligomerisierungsgrad zwischen 2 und 100 auf, wobei an jedem Silicium im Organosiloxan eine funktionelle Gruppe gebunden ist und das molare Verhältnis der im Organosiloxan enthaltenen, funktionellen Aminoalkyl- und Alkenyl-Gruppen vorzugsweise 5 : 1 bis 1 : 1, besonders vorzugsweise 3 : 1 bis 1 : 1, beträgt. Vorzugsweise liegt der durchschnittliche Oligomerisierungsgrad besagter Organosiloxane in einer erfindungsgemäßen Zusammensetzung bei 2 bis hin zu 50, besonders vorzugsweise bei 2 bis 20, ganz besonders vorzugsweise bei 3 bis 20.

Erfindungsgemäße Zusammensetzungen finden im allgemeinen bei der Silanisierung vorwiegend mineralischer Oberflächen, insbesondere von Füllstoffen und Pigmenten, Anwendung - so z. B. für Aluminiumoxide, Aluminiumhydroxide, Magnesiumoxid, Magnesiumhydroxide, z. B. Brucit, pyrogene oder gefällte Kieselsäure, Titandioxid, Carbonate, wie Kreide, Calcium- sowie Bariumsuifat, Silicate, wie Talkum, Kaolin, Glimmer, z. B. Muscovit, Wollastonit, Glasfasern, Glaskugeln, Ruß, um nur einige Beispiele zu nennen.

Besagte Füllstoffe oder Pigmente, die vorteilhaft unter Verwendung einer erfindungsgemäßen Zusammensetzung silanisiert sind, können beispielsweise in Klebstoffen, Dichtungsmassen, Polymermassen sowie Compounds, Anstrichfarben und Lacken eingesetzt werden.

Somit ist auch die Verwendung einer erfindungsgemäßen Zusammensetzung für die Silanisierung von Oberflächen, insbesondere für die Modifizierung von Pigmenten und Füllstoffen, Gegenstand der vorliegenden Erfindung.

Ferner bewirken erfindungsgemäße Zusammensetzungen bei der Silanisierung von Füllstoffen, beispielsweise bei Aluminiumhydroxid, neben einer Modifizierung der Eigenschaften, einen deutlichen Vorteil bei der Durchführung eines Verfahrens zur Silanisierung von Füllstoffen und Pigmenten - das Gegenstand einer Parallelanmeldung ist -, wobei eine Paste eines zu silanisierenden Pigments bzw. Füllstoffs durch Zusatz vergleichsweise geringer Mengen einer erfindungsgemäßen Zusammensetzung und einer damit verbundenden, gleichzeitigen Viskositätsminderung in einfacher und wirtschaftlicher Weise beispielsweise einer vorteilhaften Weiterverarbeitung durch Sprühtrocknung zugänglich gemacht werden kann.

Auch zeigen Untersuchungen, bei denen einer 60%igen "Kreide-Paste" 1 Gew.-%, bezogen auf den Feststoffanteil der Paste, erfindungsgemäße Zusammensetzung zugesetzt werden, eine überaus starke Viskositätserniedrigung auf weniger als 6 % der Anfangsviskosität. Darüber hinaus wurde gefunden, daß sich das filtrierte und bei 110 °C getrocknete, silanisierte Produkt beispielsweise in Pentan in hervorragender Weise suspendieren läßt, während unbehandelte Kreide "Klumpen" bildet.

Bevorzugt werden erfindungsgemäße Zusammensetzungen somit auch in vorteilhafter Weise für die Herstellung silanisierter Füllstoffe oder Pigmente verwendet, die eine Verringerung der Viskosität Füllstoff- oder Pigment-haltiger Zubereitungen oder eine Verbesserung der Suspendierbarkeit besagter Füllstoffe oder Pigmente in Lösemitteln bewirken.

Die vorliegende Erfindung wird durch die nachfolgenden Beispiele näher erläutert.

### Vergleichsbeispiel A

Herstellung eines wasserlöslichen Co-Hydrolysats aus 3-Aminopropyltriethoxysilan(AMEO) und Vinyltrimethoxysilan (VTMO): 297.6 g (1,346 mol) AMEO und 79,4 g (0,536 mol) VTMO werden in einem Rührreaktor mit Destilliervorrichtung vorgelegt. 600,0 g deionisiertes Wasser werden über eine Dosiervorrichtung innerhalb einer Stunde zudosiert. Dabei steigt die Temperatur auf ca. 40 °C an. Das Reaktionsgemisch wird zwei Stunden bei 60 °C gerührt. Danach wird ein Alkohol/Wasser-Gemisch unter Vakuum abdestilliert und gleichzeitig durch Wasser ersetzt [Druck: 250 bis 133 mbar; T (Sumpf): 50 °C]. Wenn die Kopftemperatur ca. 50 °C beträgt und das Kopfprodukt nur noch Wasser enthält, wird die Destillation beendet.

Eine so erhaltene Zusammensetzung weist in der Regel einen pH-Wert zwischen 10 und 11 sowie einen Alkoholgehalt von weniger als 0,1 Gew.-% auf und besitzt eine Lagerstabilität von rd. 6 Monaten.

### Beispiel 1

Herstellung eines wasserlöslichen Co-Hydrolysats aus 3-Aminopropyltriethoxysilan (AMEO) und Vinyltrimethoxysilan (VTMO): 442,2 g (2,0 mol) AMEO und 296,2 g (2,0 mol) VTMO werden in einem Rührreaktor mit Destilliervorrichtung vorgelegt. 144,0 g Wasser (2,0 mol/mol Si) werden über eine Dosiervorrichtung innerhalb von 10 Minuten zudosiert. Dabei steigt die Temperatur von Raumtemperatur auf ca. 60 °C. Der Ansatz wird eine Stunde gerührt. Danach werden 119,1g 85%ige Ameisensäure (1,1 mol/mol AMEO) im Zeitraum von einer Stunde zugegeben. Die Temperatur steigt hierbei auf ca. 65 °C an. Der Hydrolysealkohol wird unter Vakuum abdestilliert und gleichzeitig durch Wasser ersetzt [Druck: 250 bis 133 mbar, T (Sumpf): 42 bis 53 °C]. Wenn die Kopftemperatur ca. 50 °C beträgt und das Kopfprodukt nur noch Wasser enthält, wird die Destillation beendet, und das Produkt wird mit Wasser auf ein Gewicht von 923,0 g eingestellt.

Die so hergestellte Zusammensetzung weist einen pH-Wert zwischen 4 und 5 sowie einen Alkoholgehalt von weniger als 0,1 Gew.-% auf und besitzt in besonders vorteilhafter Weise eine Lagerstabilität von 12 Monaten.

### Vergleichsbeispiel B

500 g Aluminiumhydroxid - nachfolgend kurz ATH genannt - (Martinal® OL-107) und 500 g VE-Wasser werden mit einem Hochleistungsrührer innig zu einer Paste vermischt, unter Rühren 1 Gew.-% des Produkts aus Vergleichsbeispiel A, bezogen auf ATH, portionsweise zugegeben und jeweils nach einer Zeit von 3 Minuten mit Hilfe eines Brookfield-Viskosimeters (Typ Rotationsviskosimeter RVT, Spindel 5/6) die Viskosität gemessen, vgl. Tabelle 1.

### Beispiel 2

Das Vergleichsbeispiel B wird in entsprechender Weise unter Einsatz des Produkts aus Beispiel 1 wiederholt, vgl. Tabelle 1

Der Vergleich zeigt, daß die Viskosität der anfänglichen ATH-Paste bereits durch vergleichsweise geringe Mengen des erfindungsgemäßen Produkts aus Beispiel 1 gegenüber dem Produkt aus Vergleichsbeispiel A in sehr wirkungsvoller und anschaulicher Weise gesenkt werden kann.

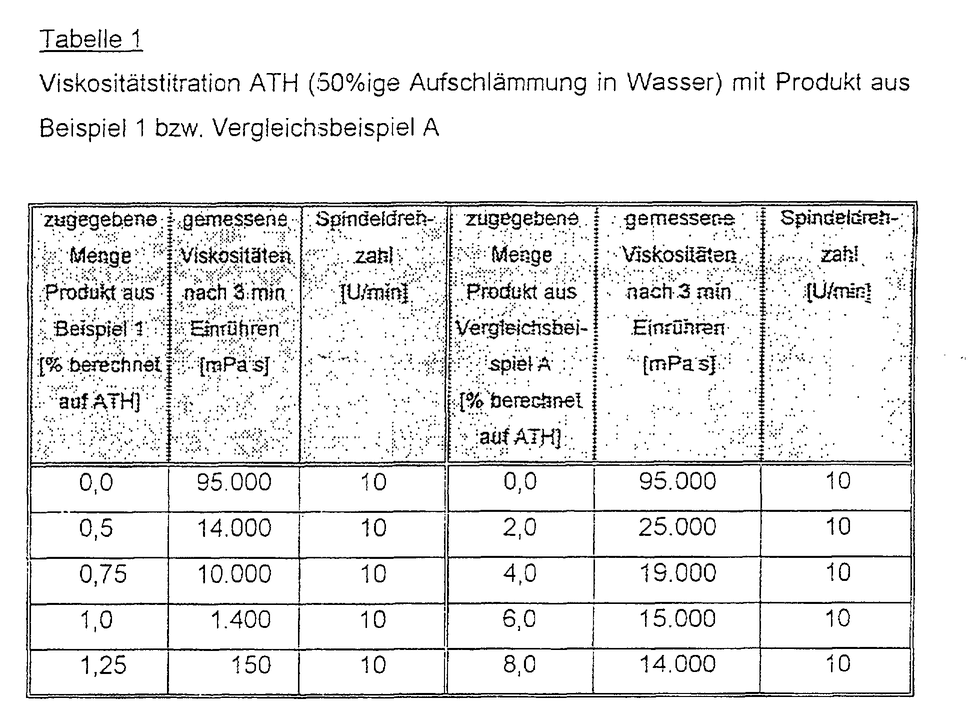

### Veroleichsbeispiel C

Das Vergleichsbeispiel B wird in entsprechender Weise unter Einsatz von Kreide (OMYALITE® 50) wiederholt, vgl. Tabelle 2.

### Beispiel 3

Das Vergleichsbeispiel C wird in entsprechender Weise unter Einsatz von Produkt aus Beispiel 1 wiederholt, vgl. Tabelle 2.

Auch hier zeigt sich bereits nach wenigen Minuten eine signifikante Viskositätserniedrigung. Die anfängliche "Kreide-Paste" wird bereits nach Zugabe vergleichsweise geringer Mengen an Produkt aus Beispiel 1 dünnflüssig, läßt sich ohne Probleme pumpen und im Laborsprühtrockner trocknen.

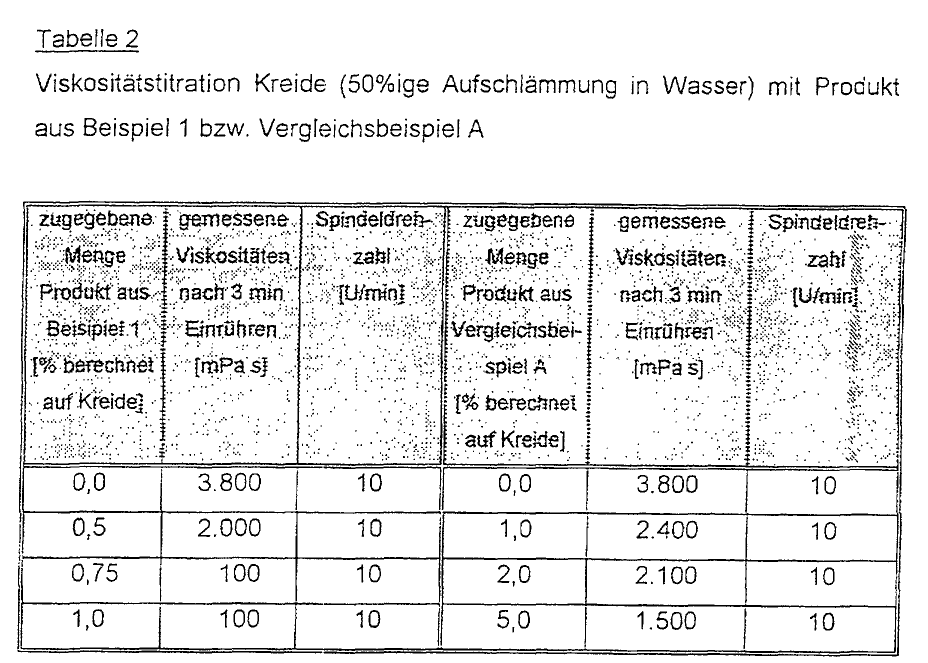

## Patentansprüche

1. Stabile Zusammensetzung wasserlöslicher Organosiloxane, die erhältlich ist durch Umsetzen
a) von einem in Wasser löslichen, Amino-funktionellen Alkoxysilan mit mindestens einem in Wasser unlöslichen, Alkenyl-funktionellen Alkoxysilan
b) durch Zusatz von Wasser und
c) Entfernen des Alkohols, der während der Durchführung von Schritt b) entsteht, aus dem vorliegenden Gemisch,
wobei das Amino-funktionelle Alkoxysilan und das Wasser mindestens in solchen Mengen bei der Umsetzung eingesetzt werden, die es ermöglichen, alle Alkoxygruppen des in Wasser unlöslichen Silans zur Reaktion zu bringen und bei Verdünnen einer so erhaltenen Zusammensetzung mit Wasser im wesentlichen kein Alkohol durch Hydrolyse freigesetzt wird, und die Zusammensetzung einen pH-Wert von 2 bis 6 besitzt, wobei die Einstellung des pH-Werts während und/oder nach der Umetzung durch Zugabe einer organischen oder anorganischen, gegebenenfalls wäßrigen Säure erfolgt.

2. Zusammensetzung nach Anspruch 1
**gekennzeichnet durch**
einen pH-Wert von 3 bis 5.

3. Zusammensetzung nach Anspruch 2
**gekennzeichnet durch**
einen pH-Wert von 3,5 bis 4,5.

4. Zusammensetzung nach einem der Ansprüche 1 bis 3
**gekennzeichnet durch**
einen Gehalt an Organosiloxan von 1 bis 150 g Si/kg.

5. Zusammensetzung nach einem der Ansprüche 1 bis 4,
**dadurch gekennzeichnet,**
**daß** an jedem Silicium im Organosiloxan eine funktionelle Gruppe gebunden ist.

6. Zusammensetzung nach einem der Ansprüche 1 bis 5,
**dadurch gekennzeichnet,**
**daß** das Verhältnis der im Organosiloxan enthaltenen, funktionellen Aminoalkyl- und Alkenyl-Gruppen 5 : 1 bis 1 : 1 beträgt.

7. Zusammensetzung nach einem der Ansprüche 1 bis 6,
**dadurch gekennzeichnet,**
**daß** der durchschnittliche Oligomerisierungsgrad des Organosiloxans zwischen 2 und 100 liegt.

8. Zusammensetzung nach einem der Ansprüche 1 bis 7,
**dadurch gekennzeichnet,**
**daß** die Zusammensetzung Alkohol in einer Menge von 0,05 bis 1 Gew.- % enthält.

9. Zusammensetzung nach einem der Ansprüche 1 bis 8,
**dadurch gekennzeichnet,**
**daß** der Flammpunkt der Zusammensetzung über 70 °C liegt.

10. Verfahren zur Herstellung einer stabilen Zusammensetzung wasserlöslicher Organosiloxane nach einem der Ansprüche 1 bis 9, indem man ein in Wasser lösliches, Amino-funktionelles Alkoxysilan mit mindestens einem in Wasser unlöslichen, Alkenyl-funktionellen Alkoxysilan unter Zugabe von Wasser und gegebenenfalls unter Zusatz einer organischen oder anorganischen Säure umsetzt und den dabei entstehenden Alkohol aus dem vorliegenden Gemisch entfernt, wobei das Amino-funktionelle Alkoxysilan und das Wasser bei der Umsetzung mindestens in solchen Mengen eingesetzt werden, die es ermöglichen, alle Alkoxygruppen des in Wasser unlöslichen Silans zur Reaktion zu bringen und bei Verdünnen einer so erhaltenen Zusammensetzung mit Wasser im wesentlichen kein Alkohol durch Hydrolyse freigesetzt wird, und wobei der pH-Wert der Zusammensetzung während und/oder nach der Umsetzung durch Zugabe einer organischen oder anorganischen, gegebenenfalls wäßrigen Säure auf einen Wert von 2 bis 6 eingestellt wird.

11. Verfahren nach Anspruch 10,
**dadurch gekennzeichnet,**
**daß** man als Amino-funktionelles Alkoxysilan mindestens eines aus der Reihe 3-Aminopropyltrimethoxysilan, 3-Aminopropyl-methyl-dimethoxysilan, 3-Aminopropyltriethoxysilan, 3-Aminopropyl-methyl-diethoxysilan, N-Aminoethyl-3-aminopropyltrimethoxysilan, N-Aminoethyl-3-aminopropyl-methyl-dimethoxysilan, N-Aminoethyl-3-aminopropyltriethoxysilan, N-Aminoethyl-3-aminopropyl-methyl-dimethoxysilan, triaminofunktioneller Propyltrimethoxysilane, triaminofunktioneller Propyl-methyl-dimethoxysilane, triaminofunktioneller Propyltriethoxysilane und triaminofunktioneller Propyl-methyl-diethoxysilane einsetzt.

12. Verfahren nach Anspruch 10 oder 11,
**dadurch gekennzeichnet,**
**daß** man als Alkenyl-funktionelles Alkoxysilan mindestens eines aus der Reihe Vinyltrimethoxysilan, Vinyltriethoxysilan, Vinyltris(2-methoxyethoxy)silan oder Vinyltrichlorsilan einsetzt.

13. Verwendung einer Zusammensetzung nach einem der Ansprüche 1 bis 12 für die Silanisierung von Oberflächen.

14. Verwendung einer Zusammensetzung nach einem der Ansprüche 1 bis 13 für die Modifizierung der Eigenschaften von Füllstoffen und Pigmenten.

15. Verwendung einer Zusammensetzung nach einem der Ansprüche 1 bis 14 für eine Verringerung der Viskosität Füllstoff- oder Pigment-haltiger Zubereitungen.

16. Verwendung einer Zusammensetzung nach einem der Ansprüche 1 bis 15 für eine Verbesserung der Suspendierbarkeit von Füllstoffen oder Pigmenten in Lösemitteln.

## Claims

1. A stable composition of water-soluble organosiloxanes obtainable by reacting
a) a water-soluble amino-functional alkoxysilane with at least one water-insoluble alkenyl-functional alkoxysilane
b) by adding water and
c) removing the alcohol formed during step b) from the mixture,
the amino-functional alkoxysilane and the water being used in the reaction at least in amounts such that all of the alkoxy groups of the water-insoluble silane are able to react and such that when a resulting composition is diluted with water, essentially no alcohol is liberated by hydrolysis, and the composition has a pH of from 2 to 6, the pH being adjusted during and/or after the reaction by adding an organic or inorganic, optionally aqueous, acid.

2. A composition according to claim 1, **characterized by** a pH of from 3 to 5.

3. A composition according to claim 2, **characterized by** a pH of from 3.5 to 4.5.

4. A composition according to any one of claims 1 to 3, **characterized by** a content of organosiloxane of from 1 to 150 g of Si/kg.

5. A composition according to any one of claims 1 to 4, **characterized in that** a functional group is bonded to each silicon in the organosiloxane.

6. A composition according to any one of claims 1 to 5, **characterized in that** the ratio of the functional aminoalkyl groups and alkenyl groups present in the organosiloxane is from 5:1 to 1:1.

7. A composition according to any one of claims 1 to 6, **characterized in that** the mean degree of oligomerization of the organosiloxane is between 2 and 100.

8. A composition according to any one of claims 1 to 7, **characterized in that** the composition contains alcohol in an amount of from 0.05 to 1% by weight.

9. A composition according to any one of claims 1 to 8, **characterized in that** the flash point of the composition is above 70°C.

10. A process for the preparation of a stable composition of water-soluble organosiloxanes according to any one of claims 1 to 9, which comprises reacting a water-soluble amino-functional alkoxysilane with at least one water-insoluble alkenyl-functional alkoxysilane with the addition of water and optionally with the addition of an organic or inorganic acid, and removing the alcohol formed in the reaction from the mixture, the amino-functional alkoxysilane and the water being used in the reaction at least in amounts such that all of the alkoxy groups of the water-insoluble silane are able to react and such that when a resulting composition is diluted with water, essentially no alcohol is liberated by hydrolysis, and the pH of the composition during and/or after the reaction being adjusted to a value of from 2 to 6 by adding an organic or inorganic, optionally aqueous, acid.

11. A process according to claim 10, **characterized in that** the amino-functional alkoxysilane used is at least one from the series consisting of 3-aminopropyltrimethoxysilane, 3-aminopropylmethyldimethoxysilane, 3-aminopropyltriethoxysilane, 3-aminopropylmethyldiethoxysilane, N-aminoethyl-3-aminopropyltrimethoxysilane, N-aminoethyl-3-aininopropylmethyldimethoxysilane, N-aminoethyl-3-aminopropyltriethoxysilane, N-aminoethyl-3-aminopropylmethyldimethoxysilane, triamino-functional propyltrimethoxysilanes, triamino-functional propylmethyldimethoxysilanes, triamino-functional propyltriethoxysilanes and triamino-functional propylmethyldiethoxysilanes.

12. A process according to claim 10 or 11, **characterized in that** the alkenyl-functional alkoxysilane used is at least one from the series consisting of vinyltrimethoxysilane, vinyltriethoxysilane, vinyltris(2-methoxyethoxy)silane and vinyltrichlorosilane.

13. The use of a composition according to any one of claims 1 to 12 for the silanization of surfaces.

14. The use of a composition according to any one of claims 1 to 13 for the modification of the properties of fillers and pigments.

15. The use of a composition according to any one of claims 1 to 14 for reducing the viscosity of filler- or pigment-containing preparations.

16. The use of a composition according to any one of claims 1 to 15 for improving the suspendability of fillers or pigments in solvents.

## Revendications

1. Composition stable d'organosiloxanes solubles dans l'eau qui est accessible par réaction,
a) d'un aikoxysilane soluble dans l'eau fonctionnalisé par une amine avec au moins un alkoxysilane insoluble dans l'eau fonctionnalisé par un alkényle,
b) par addition d'eau et
c) élimination de l'alcool qui se forme pendant l'exécution de l'étape b), du mélange présent,
dans laquelle l'alkoxysilane fonctionnalisé par une amine et l'eau sont mis en oeuvre au moins en quantités telles dans la réaction qu'il est possible d'amener tous les groupes alkoxy du silane insoluble dans l'eau en réaction, et par dilution d'une composition ainsi obtenue avec de l'eau on ne libère pour l'essentiel aucun alcool par hydrolyse, et la composition possède une valeur de pH allant de 2 à 6, l'ajustement de la valeur du pH pendant et/ou après la réaction s'effectuant par addition d'un acide organique ou minéral, éventuellement aqueux.

2. Composition selon la revendication 1,
**caractérisée par**
une valeur de pH allant de 3 à 5.

3. Composition selon la revendication 2,
**caractérisée par**
une valeur de pH allant de 3,5 à 4,5.

4. Composition selon l'une quelconque des revendications 1 à 3,
**caractérisée par**
une teneur en organosiloxane de 1 à 150 g de Si/Kg.

5. Composition selon l'une quelconque des revendications 1 à 4,
**caractérisée en ce que**
sur chaque atome de silicium dans l'organosiloxane, un groupe fonctionnel est lié.

6. Composition selon l'une quelconque des revendications 1 à 5,
**caractérisée en ce que**
le rapport des groupes fonctionnels aminoalkyle et alkényle contenus dans l'organosiloxane s'élève de 5 : 1 à 1 : 1.

7. Composition selon l'une quelconque des revendications 1 à 6,
**caractérisée en ce que**
le degré d'oligomérisation moyen de l'organosiloxane se situe entre 2 et 100.

8. Composition selon l'une quelconque des revendications 1 à 7,
**caractérisée en ce que**
la composition contient de l'alcool en une quantité allant de 0,05 à 1 % en poids.

9. Composition selon l'une quelconque des revendications 1 à 8,
**caractérisée en ce que**
le point d'inflammation de la composition se situe au-dessus de 70°C.

10. Procédé de préparation d'une composition stable d'organosiloxanes solubles dans l'eau, selon l'une quelconque des revendications 1 à 9, dans lequel on fait réagir un alkoxysilane fonctionnalisé par une amine, soluble dans l'eau avec au moins un alkoxysilane insoluble dans l'eau fonctionnalisé par un aikényle par addition d'eau et éventuellement en ajoutant un acide organique ou minéral, et on élimine l'alcool qui s'est formé de cette manière du présent mélange, dans lequel l'alkoxysilane fonctionnalisé par une amine et l'eau sont mis en oeuvre au cours de la réaction au moins en quantités telles que cela rend possible de mettre en réaction tous les groupes alkoxy du silane insoluble dans l'eau, et par dilution d'une composition ainsi obtenue avec de l'eau, pour l'essentiel aucun alcool n'est libéré par hydrolyse, la valeur du pH de la composition pendant et/ou après la réaction étant ajustée à une valeur allant de 2 à 6 par addition d'un acide organique ou minéral, éventuellement aqueux.

11. Procédé selon la revendication 10,
**caractérisé en ce qu'**
on met en oeuvre comme alkoxysilane fonctionnalisé par une amine au moins un silane choisi dans la série du 3-aminopropyltriméthoxysilane, 3-aminopropyl-méthyl-diméthoxy-silane, 3-aminopropyltriéthoxysilane, 3-aminopropyl-méthyl-diéthoxysilane, N-aminoéthyl-3-aminopropyltriméthoxysilane, N-amioéthyl-3-amino-propyl-méthyldiméthoxysilane, N-aminoéthyl-3-aminopropyltriéhoxysiane, N-aminoéthyl-3-aminopropyl-méthyl-diméhoxysilane, des propyltriméthoxysilanes fonctionnalisés par trois amines, des propyl-méthyldiméthoxysilanes fonctionnalisés par trois amines, des propyltriéthoxysilanes fonctionnalisés par trois amines, des propyl-méthyldiéthoxysilanes fonctionnalisés par trois amines.

12. Procédé selon l'une quelconque des revendications 10 ou 11,
**caractérisé en ce qu'**
on met en oeuvre comme alkoxysilane fonctionnalisé par un alkényle, au moins un silane choisi dans la série du vinyltriméthoxysilane, du vinyltriéthoxysilane, du vinyltris(2-méthoxy-éthoxy)silane ou du vinyltrichlorosilane.

13. Utilisation d'une composition selon l'une quelconque des revendications 1 à 9,
pour la silanisation des surfaces.

14. Utilisation d'une composition selon l'une quelconque des revendications 1 à 9,
pour la modification des propriétés de substances de charge et de pigments.

15. Utilisation d'une composition selon l'une quelconque des revendications 1 à 9,
pour une diminution de la viscosité des préparations contenant des substances de charge ou un pigment.

16. Utilisation d'une composition selon l'une quelconque des revendications, 1 à 9,
pour l'amélioration de l'aptitude à la mise en suspension de substances de charge ou de pigments dans des solvants.
